# EUROPEAN PATENT APPLICATION

(11) **EP 1 988 285 A1**
(43) Date of publication of application: **05.11.2008**
(21) Application number: 07712558.1
(22) Date of filing: 08.02.2007
(51) Int. Cl.: F03D 7/02, F04B 49/20, F04B 49/06

(54) **DEVICE FOR CONTROLLING THE BLADES OF A WIND TURBINE**

(30) Priority: 09.02.2006 ES 200600296
(71) Applicant: Hydra-Power, S.L., 46980 Paterna Valencia (ES)
(72) Inventor: ROMERO VERGEL, Unai, E-46980 Paterna - Valencia (ES); MARINA DIAZ, Victor, E-46980 Paterna - Valencia (ES)
(74) Representative: Ungria Lopez, Javier
(86) International application number: PCT/ES2007/000065
(87) International publication number: WO 2007/090917

(57) **Abstract**

The invention relates to a device for controlling the blades of a wind turbine. According to the invention, each blade (7) is associated with means enabling same to rotate about the longitudinal axis thereof in order to: alter the angle of attack of the blades (7) in relation to the wind and select the power required, while maintaining a constant rotor speed; or stop the blades (7) when a pre-established rotation speed is exceeded. The invention is **characterised in that** the above-mentioned rotation means include: an electric motor (11) having an electronically-variable speed, a hydraulic pump/motor (10) included in a standard hydraulic circuit (1), and control means (12) for rotating the blades (7) using the electric motor (11) and the hydraulic pump/motor (10) in the presence of a power supply and for rotating the blades (7) using only the emergency and safety control module (4) and the emergency and safety hydraulic accumulator (5) in the absence of a power supply.

## Description

### OBJECT OF THE INVENTION

The invention refers to a device for controlling the blades of a wind turbine to enable it to modify the angle of attack of said blades in relation to the wind in order to regulate the power required while maintaining a constant rotor speed, or to cause the blades to stop moving when a pre-established rotation speed is exceeded; and to increase the power performance and the wind turbine blade control function.

### BACKGROUND OF THE INVENTION

Wind turbines are known in the state of the art as devices to produce electric power from eolic energy that are equipped to this effect with a carcass support having on its frontal side blades which turning action actuates a rotor from which electric power is obtained. To do this the wind turbine is oriented into the wind so the blades are facing the incoming wind and cause the rotor to rotate.

In addition, the number of rotor revolutions and the power supplied by wind turbines can also be regulated through a system that regulates the angle of attach of each of the blades in relation to the wind so they present a greater or lesser surface to the wind in this manner obtain the desired power.

Furthermore, this system is used to preserve the rotor from reaching runaway speeds. When the rotor exceeds a pre-established gyrating speed each of the blades are caused to rotate according to their longitudinal axis into a position pitched parallel to the wind's direction (flag position), causing the wind turbine to come to a halt (aerodynamic brake) to prevent it from sustaining damages.

In this sense, there are two large groups of systems for controlling the blades' angle of attack. The first group of system comprises electromechanical systems in which the blade is actuated by means of an electrical motor which speed can be regulated by a planetary reducer. This system has the considerable advantage of offering high performance and direct control on the blade, but has the disadvantage of requiring safety systems involving electric power accumulator devices such as batteries and/or condensers, while also offering a low degree of control of the blade actuating speed during emergency situations. A second group of systems is comprised by electrohydraulic systems involving a hydraulic system that includes hydraulic accumulators that are used to actuate the blade rotation function even in the absence of electric power, while also offering a high degree of control over the blade's speed of rotation during emergency situations. These systems have, however, the disadvantage of losing performance efficiency due to the servo control mechanism. This loss of performance is due to part of the power being transformed into heat that heats up the system, which in addition requires a high filtration of the oleohydraulic oil.

Therefore, both systems have advantages and disadvantages depending on what is required of them.

No system exists that brings together the advantages of both systems while avoiding their respective disadvantages.

### DESCRIPTION OF THE INVENTION

In order to resolve the disadvantages mentioned above, the present invention has developed a device to control the blades of a wind turbine in which, in the same manner as conventional devices, each blade is individually related to gyrating means around their longitudinal axis to modify the individual blade's angle of attach and allow maintaining and selecting the required power while maintaining a constant rotor speed or to cause the blades to stop when the pre-established speed of rotation is exceeded; the rotating means are provided with a hydraulic system equipped with a safety and emergency control including safety and emergency hydraulic accumulators and an actuator that effects the rotation of the blades; the system also offers a new function **characterized in that** the rotation means also comprise an electrical motor which speed can be regulated electronically, a hydraulic pump-motor and control means to cause the blades to rotate by means of the electric motor and the hydraulic pump-motor when there is available electric power and to cause the blades to rotate only through the safety and emergency control module and the safety and emergency hydraulic accumulator (without the electrical motor) in the absence of power supply. In this manner this configuration offers the significant advantage of not requiring electrical energy accumulators such as batteries and/or condensers to govern the angle of attack of the blades when no electrical power is available to the wind turbine.

The configuration described in the present invention combines both technologies known in the art for controlling the blades of a wind turbine, the electromechanic and electrohydraulic systems already described in the Background of the Invention section, so as to take advantage of both systems while eliminating the disadvantages of both. Consequently, the device object of the invention provides a high performance flexible system with compact assembly and a safety system comprising hydraulic accumulators that also provides a high degree of control over the actuating speed during emergency situations.

The hydraulic actuator for the rotating means is selected from between a dual chamber cylinder, a three-chamber cylinder, a rotative actuator and a hydraulic motor equipped with speed reducer.

In addition, the hydraulic pump-motor is of the type that maintains pressure at low revolutions and is capable of inverting the direction of the rotation to place the blades in the desired position.

The hydraulic pump-motor and the corresponding actuator do not pose any restriction to power transfer and therefore they do not cause any loss of in the power transmitted, thus allowing hydraulic accumulator-enabled safety and emergency control to be installed in the corresponding transmission line, making the conflictive battery and/or condenser electric power accumulating elements redundant.

The next section contains a series of figures that as integrated part of the present descriptive report are intended to illustrate and not limit the object of the invention and facilitate understanding of the written concepts contained therein.

### BRIEF DESCRIPTION OF THE FIGURES

- **Figure 1.**: Shows an outline of a possible example of an embodiment of the present invention In which the actuator used is a dual or triple chamber cylinder.
- **Figure 2.**: Shows an outline of a possible example of an embodiment of the present invention in which the actuator used is a hydraulic rotative type actuator.
- **Figure 3.**: Shows an outline of a possible example of an embodiment of the present invention in which the actuator used is a hydraulic rotative type actuator equipped with a speed reducer.

### DESCRIPTION OF THE PREFERRED EMBODIMENT

The following is a description of the present invention based on the figures listed in the previous section.

The function of the device object of the invention is to control the angle of attack of the blades of a wind turbine in relation to the wind by governing the rotation of the blades along their longitudinal axis.

Only one blade has been used to illustrate the examples of the various embodiments since the device is the same for each and every one of the blades of the wind turbine. According to the preferred embodiment the wind turbine comprises three blades 7.

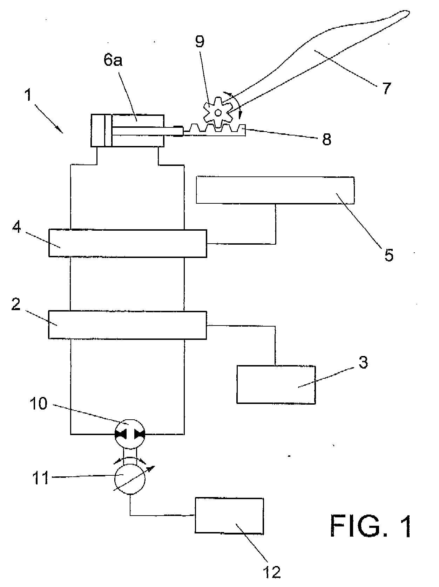

The example illustrated by Figure 1 is the lower end of a blade 7 solidarious to a sprocket 9 that engages a zipper 8 which movement is governed by a hydraulic circuit 1 and more specifically by a hydraulic actuator 6a that in Figure 1 is a dual or triple hydraulic cylinder.

Hydraulic circuit 1 also incorporates a pre-fill control 2 that is connected to the corresponding ancillary pre-fill group 3 to maintain adequate (fluid) levels in the hydraulic circuit as is conventionally done in this type of hydrostatic circuits therefore requiring no further explanation.

In the same manner, hydraulic circuit 1 is equipped with a conventional safety and emergency control module 4 connected to a safety and emergency hydraulic accumulator 5.

The innovative aspect of the present invention resides in having incorporated a hydraulic pump-motor 10 connected in turn to an variable speed electrical motor 11 governed by a control circuit 12.

By means of this configuration, provided there is electrical power supply to the wind turbine, the angle of attack of each of the blades 7 is controlled by activation the electrical motor 11, which revolutions are governed in turn by the control circuit 12, obtaining a rapid speed changing response from electrical motor 11, that moves the hydraulic pump-motor 10 from the hydraulic circuit 1 causing the actuating of the dual or triple-chambered cylinder 6a which serves to modify the angle of attack of blade 7.

The hydrostatic transmission between the hydraulic pump-motor 10 and the dual or triple-chambered cylinder 6a does not offer any transfer restriction and therefore does not cause losses in transmitted power, which in turns allows installing the safety and emergency control module 4 to be installed in the transmission line with the safety and emergency hydraulic accumulator 5 making the use of electric accumulators such as batteries and/or condensers unnecessary.

When electric power supply is not available to the wind turbine (emergency situation) and the angle of attack of blades 7 must be altered in relation to the wind (flag position), the dual or triple cylinder is activated by means of the safety and emergency control module 4 and the emergency hydraulic accumulator 5, so the movement is powered by the safety and emergency control module 4 and the emergency hydraulic accumulator 5 instead of by electrical motor 11 and the hydraulic pump-motor 10.

The variation of the angle of attack of blades 7 in relation the wind is done to select the required power at any given time while the rotor speed is kept constant, or to cause the rotor to stop when it exceeds a pre-established rotating speed, in which case blades 7 are made to rotate on their longitudinal axis until achieving a position parallel to the wind's direction (flag or cero position) so blades 7 come to a stop. After the wind velocity diminishes to a suitable velocity the blades are placed again in a position facing the wind and it is to provide for this circumstance that the hydraulic pump-motor 10 is made to be capable of inverting the direction of rotation in the same manner as electric motor 11.

Also the hydraulic pump-motor 10 is of the type that maintains pressure at low revolutions to obtain better control on the desired rotation of blades 7.

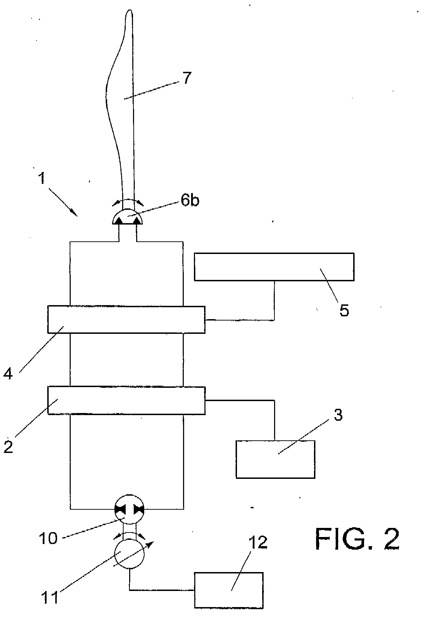

Figure 2 shows a different but completely equivalent example of an embodiment to that shown in Figure 1. The one difference is that the hydraulic actuator incorporated in the hydraulic circuit 1 is comprised by a rotative actuator 6b that causes blades 7 to rotate around their longitudinal axis and all of it governed by the action of the hydraulic pump-motor 10 in the manner described in the previous example.

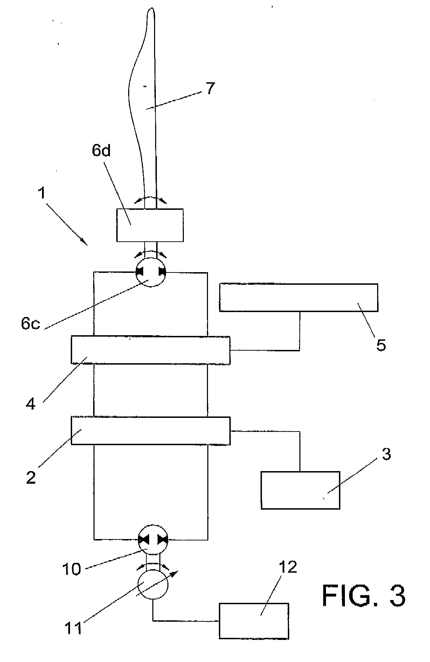

Figure 3 shows a different embodiment that is also equivalent to those examples shown in previous figures. The difference in this case resides in that the hydraulic actuator used is comprised by a hydraulic motor 6c that is connected to a speed reducer 6d to produce the angular movement of blade 7 around its longitudinal axis.

## Claims

1. **DEVICE TO CONTROL THE BLADES OF A WIND TURBINE** in which each blade (7) is related to rotating means around its longitudinal axis to modify the angle of attack of said blade (7) in relation to the wind and to effect an operation that can be either selecting the required power while maintaining a constant rotor speed or stopping the blades (7) movement when the pre-established speed of rotation is exceeded; the rotation means being comprised by a hydraulic circuit (1) that includes a safety and emergency control module (4) and a safety and emergency hydraulic accumulator (5) and an actuator that effects the rotation of the blades (7); and it is **characterized in that** the rotation means further comprise an electrical motor (11) which variable speed is regulated electronically (12) and a hydraulic pump-motor (10) and control means (12) to cause the blades to rotate (7) by means of the electrical motor (11) and the hydraulic pump-motor (10) when there is available electrical power and to cause the blades to rotate only through the safety and emergency control module (4) and a safety and emergency hydraulic accumulator (5) when no electrical power is available.

2. **DEVICE TO CONTROL THE BLADES OF A WIND TURBINE** according to claim 1, **characterized in that** the actuator included in the hydraulic circuit of the rotating means is selected from amongst a dual chamber cylinder (6a), a triple chamber cylinder (6a), a rotative actuator (6b) and a hydraulic motor (6c) equipped with a speed reducer (6d).

3. **DEVICE TO CONTROL THE BLADES OF A WIND TURBINE** according to claim 2, **characterized in that** the electrical motor (11) may be actuated in both directions and the hydraulic pump-motor (10) is of the type that maintains pressure at low revolutions and is capable of inverting the direction of the rotation to place the blades in the desired position.
